# EUROPÄISCHE PATENTSCHRIFT

(11) **EP 1 394 754 B1**
(45) Veröffentlichungstag und Bekanntmachung des Hinweises auf die Patenterteilung: **19.10.2011**
(21) Anmeldenummer: 03018069.9
(22) Anmeldetag: 08.08.2003
(51) Int. Cl.: H05B 37/02, G08B 21/02, F21V 21/00

(54) **Tragbare Einrichtung zur Erfassung der Bewegung einer Person mit einem Leuchtmittel und/oder einem Sender**
Portable device for detecting human movements with a lamp and/or a transmitter
Dispositif portable pour la détection des mouvements d'une personne avec une lampe et/ou un émetteur

(30) Priorität: 13.08.2002 DE 10237020
(43) Veröffentlichungstag der Anmeldung: 03.03.2004
(73) Patentinhaber: Schmetzer, Helmut, 95448 Bayreuth (DE)
(72) Erfinder: Schmetzer, Helmut, 95448 Bayreuth (DE)
(74) Vertreter: Blaumeier, Jörg

(56) Entgegenhaltungen:
- EP-A- 0 785 701
- DE-A- 4 039 713
- US-A- 5 015 994
- US-A- 5 265 000
- US-A- 5 489 891
- PATENT ABSTRACTS OF JAPAN vol. 1998, no. 09, 31. Juli 1998 (1998-07-31) & JP 10 106410 A (TOSHIBA LIGHTING &TECHNOL CORP), 24. April 1998 (1998-04-24)

## Beschreibung

Die Erfindung betrifft eine tragbare Einrichtung zur Erfassung der Bewegung einer Person und Ausführung einer Reaktion bei einer erfassten Bewegung.

Personen, die privat oder geschäftlich häufig reisen, übernachten oft in Hotels oder anderen Unterkünften, die ihnen naturgemäß fremd sind. Erhebt sich nun die Person bei Dunkelheit im Zimmer aus dem Bett, wo weiß sie häufig nicht, wo der Lichtschalter ist und muss diesen erst umständlich suchen.

Werden kleinere Kinder während des Schlafs mit einem sogenannten Babyphone umfassend einen im Kinderzimmer befindlichen Sender, der auf Geräusche des Kindes anspricht, und einen von einem Erwachsenen mitgenommenen Empfänger, an den die Geräusche übertragen werden, überwacht, so ergibt sich in diesem Fall ein Problem dahingehend, dass jedes auch noch so geringes, knapp überhalb der Empfindlichkeitsschwelle des Senders befindliches Geräusch übertragen wird, was zum einen sehr störend für den Erwachsenen ist, zum anderen auch oft nicht erforderlich ist, da sich das Kind beispielsweise lediglich umgedreht hat und auf jeden Fall kein Grund vorliegt, dass man sich um das Kind kümmern müsste. Erst wenn sich das Kind im Bett erhebt, also definitiv wach ist, wäre letztlich die Gabe eines Informationssignals erforderlich.

Beiden beschriebenen Fällen liegt letztlich das gleiche Problem zugrunde, nämlich dass sich insbesondere in einem abgedunkelten Raum eine Person bewegt, wobei aufgrund einer solchen Bewegung eine Reaktion auszuführen ist, um hilfestellend einzugreifen.

Das Dokument EP 0 785 701 A offenbart eine Vorrichtung zum Steuern eines Leuchtmittels, die einen Bewegungs- oder Anwesenheitsdetektor aufweist.

Der Erfindung liegt somit das Problem zugrunde, hier Abhilfe zu schaffen.

Dies erfolgt erfindungsgemäß mit einer tragbaren Einrichtung zur Erfassung der Bewegung einer Person und Ausführung einer Reaktion bei einer erfassten Bewegung, umfassend einen die Bewegung sensierenden und die Reaktion auslösenden Näherungsschalter, wobei der Näherungsschalter in seiner Höhe variabel positionierbar ist.

Die Erfindung schlägt eine die tatsächliche Personenbewegung erfassende Einrichtung vor, wobei die Bewegungserfassung unter Verwendung eines Näherungsschalters erfolgt. Der Näherungsschalter (= Bewegungssensor) kann in seiner Höhe variabel eingestellt werden, d.h., hierüber kann sein Sensorfeld variiert werden und damit letztlich die Höhe eingestellt werden, ab welche überhaupt eine Bewegung erfasst wird. Im Falle der Verwendung der Einrichtung beispielsweise im Hotelzimmer kann also die Person den Näherungsschalter so einstellen, dass er eine Bewegung der Person erst dann erfasst, wenn diese sich zumindest im Bett aufgesetzt oder tatsächlich aufgestanden ist, so dass nicht jede Bewegung beispielsweise beim Umdrehen erfasst wird. Ähnliches. kann im Falle der beschriebenen Überwachung eines Kindes erfolgen, auch hier kann der Näherungsschalter in einer Höhe positioniert werden, dass der Erfassungsbereich so liegt, dass erst ein sich weitgehend aufgerichtetes Kind erfasst wird. Erst dann erfolgt überhaupt eine vom Näherungsschalter ausgelöste Reaktion auf die erfasste Bewegung.

Diese Reaktion kann erfindungsgemäß unterschiedlicher Natur sein. Nach einer ersten Erfindungsausgestaltung kann die Einrichtung ein über den Näherungsschalter einschaltbares Leuchtmittel umfassen. D.h., die Einrichtung verfügt über ein eigenes Leuchtmittel wie eine kleine Glühlampe, die über eine Leistungsversorgung über den Näherungsschalter dann angestellt wird, wenn eine Bewegung im eingestellten Erfassungsbereich sensiert wird. Zusätzlich oder alternativ dazu kann die Einrichtung ein über den Näherungsschalter einschaltbares Sendemittel umfassen, was primär im Falle der Überwachung eines Kleinkinds zum Einsatz kommt, da über dieses Sendemittel ein Signal an einen externen, beispielsweise vom Erwachsenen mitgeführten Empfänger gegeben werden kann. Natürlich besteht auch hier die Möglichkeit, auch ein Leuchtmittel über den Näherungsschalter anzuschalten, um eine gewisse Mindestbeleuchtung zuzuschalten.

Neben der Ausführung der Einrichtung mit dem Sendemittel in einer einem Babyphone entsprechenden Art besteht natürlich auch die Möglichkeit, über das Sendemittel eine einen Empfänger aufweisende externe Lampe einzuschalten, die beliebig im Raum positioniert werden kann.

Hinsichtlich der Leistungsversorgung sind unterschiedliche Varianten denkbar. Zum einen kann wenigstens ein Anschlussmittel zum Anschließen an eine Stromversorgung vorgesehen sein, wobei dieses Anschlussmittel prinzipiell als einfacher Netzstecker ausgebildet sein kann. Alternativ dazu besteht die Möglichkeit, das Anschlussmittel zum Einsetzen in eine übliche Glühbirnenfassung einer Beleuchtungseinrichtung auszubilden. In einem solchen Fall kann das Anschlussmittel beispielsweise ein Gewinde zum Einschrauben in eine Glühbirnenfassung aufweisen. Bei einer derartigen Ausgestaltung wird die Einrichtung über dieses Anschlussmittel in eine gewöhnliche von der Decke herabhängende Lampe eingesetzt, es hängt also von dieser frei nach unten. Die Stromversorgung erfolgt über die eigentliche Deckenlampe. Natürlich besteht auch die Möglichkeit, das Anschlussmittel als Stecker für übliche Halogenlampenfassungen auszubilden. Alternativ dazu besteht die Möglichkeit, dass die Einrichtung eine integrierte Stromversorgung in Form wenigstens einer Batterie oder wenigstens eines Akkus aufweist.

Zur Ermöglichung einer Höhenverstellbarkeit bei einer hängend und durch Einsetzen in eine Glühbirnenfassung anzuordnenden Einrichtung kann ein Kabelspeicher vorgesehen sein, aus dem oder in den ein zum Näherungsschalter führendes Kabel gezogen werden kann. Wird also die Einrichtung beispielsweise über ein Schraubgewinde in eine übliche Glühbirnenfassung geschraubt, so kann der Näherungsschalter durch einfaches Ziehen am Kabel beliebig positioniert werden. Das Kabel ist in einem Kabelspeicher geführt, der eine entsprechende Verlängerung oder Verkürzung zulässt, wobei das Kabel zweckmäßigerweise in der jeweiligen gewählten Auszugsstellung arretiert ist. Diese Weise ist also ein einfacher Längenausgleich in jede Richtung möglich.

Bei einer stehend anzuordnenden Einrichtung kann die Höhenverstellbarkeit des Näherungssensors ebenfalls über einen Kabelspeicher, aus dem oder in den ein zum Näherungsschalter führendes Kabel gezogen werden kann, sowie einen das Kabel führenden teleskopartig in seiner Länge variierbaren Trägerabschnitt realisiert sein. Nachdem hier der Näherungsschalter und das ihn tragende Kabel zwangsläufig gestützt werden müssen, bietet sich eine einfache Realisierung unter Verwendung einer Teleskophalterung an. Dies lässt sich auf einfache Weise bei jeder stehend anzuordnenden Ausführungsart der Einrichtung realisieren, sei es in Form einer nach einer Art eines Babyphones arbeitenden Einrichtung oder aber einer reinen Beleuchtungseinrichtung, gleich ob diese ein Anschlussmittel in Form eines Steckers oder eines Anschlussmittels zum Einschrauben in eine Glühbirnenfassung aufweist, wobei letztere Ausführungsform natürlich auch derart verwendet werden kann, dass das Anschlussmittel in eine Fassung einer Tischlampe oder dergleichen eingeschraubt werden kann.

Bei einer Einrichtung, bei der über den Näherungsschalter ein einrichtungsseitig integriertes Leuchtmittel einschaltet wird, oder bei der über das vom Näherungsschalter betätigtes Sendemittel ein einrichtungsexternes Leuchtmittel angesprochen wird, ist es zweckmäßig, wenn dem Näherungsschalter ein Zeitglied zugeordnet ist, das am Ende einer Bewegungserfassung angestoßen wird, wobei nach Ablauf einer vorgegebenen Zeit das Leuchtmittel automatisch über den Näherungsschalter ausgeschaltet oder das Sendemittel über den Näherungsschalter zur Gabe eines Ausschaltsignals betätigt wird. Wenn sich also die Person im Hotelzimmer wieder hinlegt und keine weitere Bewegung mehr sensiert wird, wird nach dieser Ausprägung ein Zeitglied angestoßen, nach dessen Ablauf automatisch das Licht wieder ausgeschaltet wird. D.h. die Person muss zum Ausschalten des automatisch eingeschalteten Lichts nicht selbst tätig werden. Die vorgegebene Zeit, nach welcher die automatische Ausschaltung erfolgt, kann entweder fest eingestellt oder vom Anwender selbst parametrierbar sein.

Wie beschrieben bestehen unterschiedliche Möglichkeiten eine erfindungsgemäße Einrichtung zu positionieren. Eine Möglichkeit sieht vor, die Einrichtung beispielsweise in hängender Weise in eine Glühbirnenfassung einer Stand- oder Deckenleuchte einzuschrauben, so dass die Einrichtung quasi von oben nach unten hängt. Daneben besteht die Möglichkeit, die Einrichtung stehend anzuordnen, beispielsweise auf einem Einrichtungsfuß oder dergleichen. Um die Möglichkeit der Positionierung der Einrichtung noch weiter zu verbessern, können ferner Befestigungsmittel zum Befestigen der Einrichtung an einem Drittgegenstand vorgesehen sein, wobei hier beispielsweise Sauger oder Klemmen denkbar sind die es ermöglichen, das Kabel und mit ihm den Näherungsschalter beispielsweise an einem Schrank unter Verwendung eines oder mehrerer Sauger oder dergleichen zu befestigen und so den Näherungsschalter in eine beliebige Höhe zu bringen.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine in eine Deckenlampe zu montierende erfindungsgemäße Einrichtung einer ersten Ausführungsform,
- Fig. 2: eine in eine Deckenlampe zu montierende erfindungsgemäße Einrichtung einer zweiten Ausführungsform,
- Fig. 3: eine erfindungsgemäße Einrichtung einer dritten Ausführungsform zur stehenden Anordnung,
- Fig. 4: eine stehend anzuordnende erfindungsgemäße Einrichtung einer vierten Ausführungsform, und
- Fig. 5: eine über Befestigungsmittel an einem Drittgegenstand zu befestigende erfindungsgemäße Einrichtung einer fünften Ausführungsform.

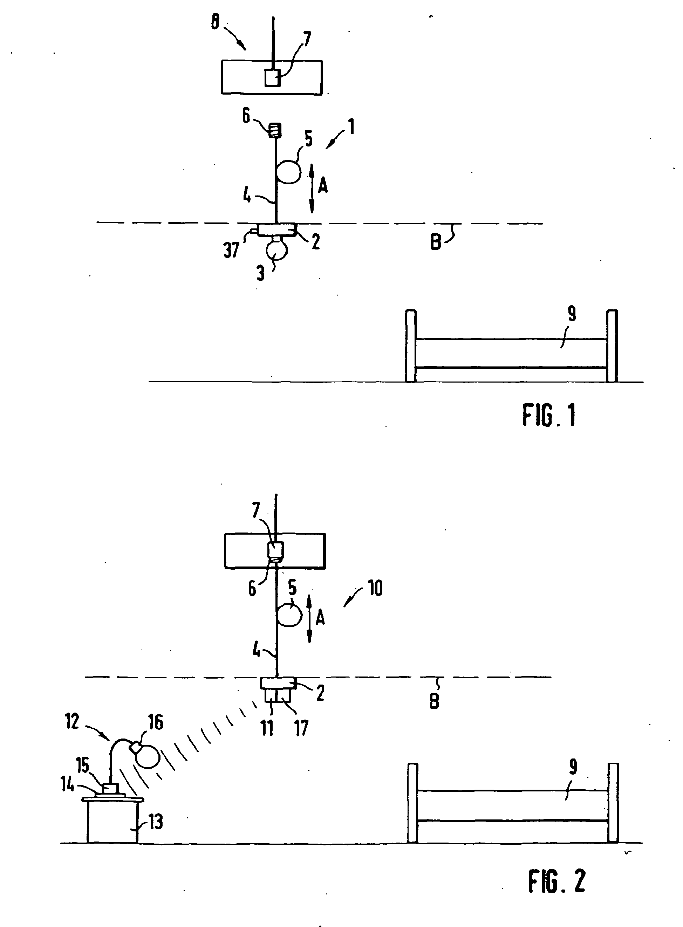

Fig. 1 zeigt eine erfindungsgemäße Einrichtung 1 einer ersten Ausführungsform. Diese umfasst einen Näherungsschalter 2 mit zugeordnetem Leuchtmittel 3, hier in Form einer kleinen Glühlampe. Der Näherungsschalter 2 bzw. das Leuchtmittel 3 sind an einem Kabel 4 mit Kabelspeicher 5 angeordnet, wobei am Ende des Kabels 4 ein Anschlussmittel in Form eines Gewindes 6 vorgesehen ist. Über dieses Gewinde 6 wird die Einrichtung 1 in eine Glühbirnenfassung 7 einer Deckenlampe 8 eingeschraubt. Nach dem Einschrauben ist die Einrichtung 1 zum einen dort befestigt und gehaltert, zum anderen erfolgt über die Glühbirnenfassung 7 die Stromversorgung des Näherungsschalters 2 sowie des Leuchtmittels 3.

Wie durch den Doppelpfeil A gezeigt kann die Einrichtung 1 in ihrer Länge variiert werden, d.h. der Näherungsschalter 2 kann mehr oder weniger weit nach unten gezogen werden. Je nach der gewählten Höhe ändert sich der Überwachungsbereich des Näherungsschalters im Hinblick auf die Erfassung einer Bewegung einer Person. Die Überwachungshöhe ist durch die gestrichelte Linie B dargestellt, der Sensorbereich des Näherungsschalters 2, der letztlich nichts anderes als ein Bewegungssensor ist, erstreckt sich im Bereich oberhalb der Linie B.

Hierdurch ist es möglich, beispielsweise die Bewegung einer sich aus dem Bett 9 erhebenden Person zu erfassen, sobald diese beim Aufstehen in den Überwachungsbereich des Näherungsschalters 2 oberhalb der Linie B eindringt. In diesem Fall schaltet der Näherungsschalter 2 durch, so dass das Leuchtmittel 3 angeschalten wird.

Zur einfachen Verlängerung oder Verkürzung der Einrichtung ist wie beschrieben der Kabelspeicher 5 als Längenausgleich vorgesehen. In diesem Kabelspeicher ist das Kabel aufgewickelt geführt, wobei das Kabel in der jeweils gewünschten Position über geeignete Mittel arretiert wird, so dass es nicht selbsttätig wieder in den Kabelspeicher zurückläuft.

Eine zweite Ausführungsform einer erfindungsgemäßen Einrichtung 10 zeigt Fig. 2. Die Einrichtung 10 entspricht der Einrichtung 1 aus Fig. 1, sie ist in bereits in die Glühbirnenfassung 7 eingeschraubter Position dargestellt. Anders als bei der Einrichtung 1 ist dem Näherungsschalter 2 hier jedoch kein Leuchtmittel 3, sondern ein Sendemittel 11 zugeordnet, das über den Näherungsschalter 2 angesprochen wird, sobald eine Bewegung innerhalb des Sensorbereichs oberhalb der Linie B, die auch hier durch entsprechendes manuelles Verlängern oder Verkürzen der Einrichtung 10 variiert werden kann, erfasst wird. In diesem Fall gibt das Sendemittel 11 ein Signal an eine zur Einrichtung 10 externe Leuchteinrichtung 12, die beispielsweise als kleine Tischlampe ausgebildet auf einem benachbarten Tisch 13 steht. An einem Fuß oder Sockel 14 ist ein Empfängermittel 15 vorgesehen, das über das Sendemittel 11 angesprochen wird. Sobald ein Signal vom Sendemittel gegeben wird, wenn eine Bewegung erfasst wird, wird das Leuchtmittel 16 über das Empfängermittel 15 eingeschalten, so dass die gewünschte Hintergrundbeleuchtung gegeben ist.

Wie Fig. 2 ferner zeigt, ist dem Näherungsschalter ferner ein Zeitglied 17 zugeordnet, das dann angestoßen wird, wenn keine Bewegung mehr innerhalb des Überwachungsbereichs oberhalb der Linie B sensiert wird. Nach Ablauf einer vorgegebenen Zeit, die der Benutzer gegebenenfalls selbst einstellen kann, wird über das Sendemittel 11 ein Ausschaltsignal an das Empfängermittel 15 gegeben, das dann automatisch das Leuchtmittel 16 ausschaltet, so dass der Benutzer, der sich beispielsweise wieder ins Bett begeben hat, nichts selbst hierfür unternehmen muss. Es ist darauf hinzuweisen, dass die externe Leuchteinrichtung 12 Teil der gesamten Einrichtung 10 ist. Denn bei dieser Einrichtung kommt es auf das Zusammenwirken des Sender- und Empfängermittels 11, 15 an.

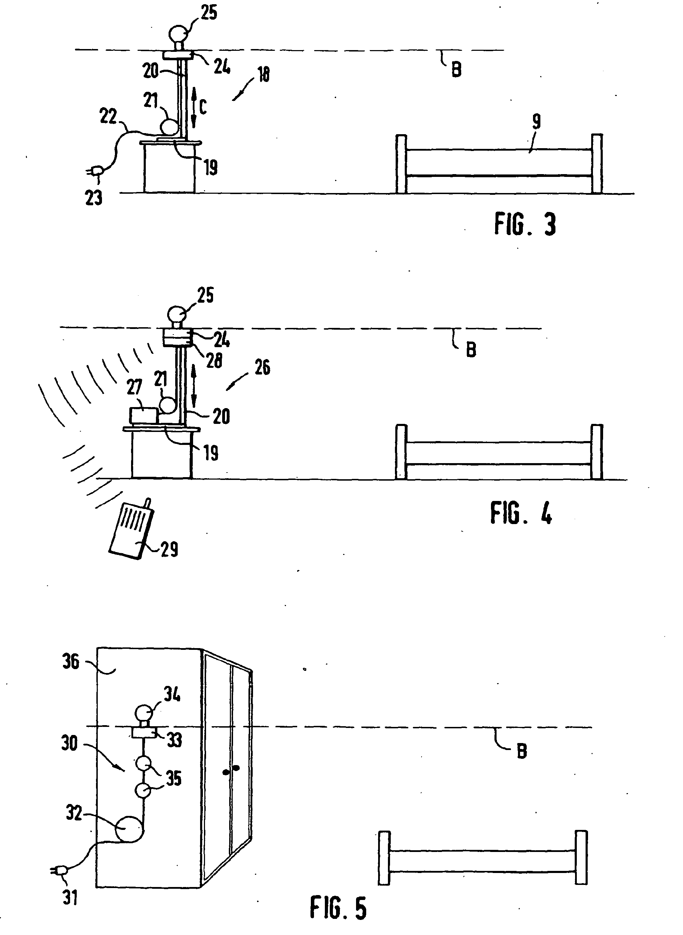

Fig. 3 zeigt eine weitere erfindungsgemäße Ausführungsform einer Einrichtung 18. Diese ist als Standeinrichtung ausgebildet und weist einen Fuß 19 sowie einen Trägerarm 20 auf, an dem das Kabel 22 geführt ist, wobei der Trägerarm wie durch den Doppelpfeil C dargestellt ist, teleskopartig verlängert oder verkürzt werden kann. Auch hier ist ein Kabelspeicher 21 vorgesehen, in oder aus dem das Kabel 22 gezogen werden kann. Zur Stromversorgung ist ein Netzstecker 23 vorgesehen, andernends ist am Kabel 22 der Näherungsschalter 24 nebst über diesen einzuschaltendem oder sofern ein Zeitglied vorgesehen ist, auch auszuschaltendem Leuchtmittel 25 vorgesehen. Auch bei dieser Ausführungsform kann also der Sensorbereich des Näherungsschalters 4, der hier ebenfalls oberhalb der Sensorlinie B liegt, durch entsprechendes Verlängern des teleskopartigen Trägerabschnitts 20 zwischen einer Maximal- und einer Minimallänge variiert werden.

Fig. 4 zeigt eine vierte Ausführungsform einer erfindungsgemäßen Einrichtung 26. Auch bei dieser handelt es sich um eine Standeinrichtung mit einem Fuß 19 und einem teleskopierbaren Trägerabschnitt 20. Zur Stromversorgung ist hier jedoch eine integrierte Leistungsversorgung 27 in Form von Batterien oder Akkus vorgesehen, wobei die Akkus über ein entsprechendes Anschlussmittel aus einem üblichen Stromversorgungsnetz aufgeladen werden können. Die Grundfunktion der Einrichtung 26 entspricht der der Einrichtung 18. Zusätzlich zum Leuchtmittel und dem Näherungsschalter ist hier ferner ein Sendemittel 28 vorgesehen, über das nach Art eines Babyphones Signale oder Geräusche und dergleichen an ein von einem Erwachsenen mitzuführenden Empfänger 29 dann gegeben werden, wenn der Näherungsschalter 24 eine Bewegung des Kindes im Überwachungsbereich oberhalb der Linie B sensiert. Natürlich kann auch hier, wenngleich nicht näher dargestellt, ein Zeitglied vorgesehen sein, um das automatisch eingeschaltete Leuchtmittel 25 auch wieder automatisch ausschalten zu können.

Fig. 5 zeigt schließlich eine fünfte Ausführungsform einer erfindungsgemäßen Einrichtung 30. Auch diese weist einen Netzstecker 31, einen Kabelspeicher 32, einen Näherungsschalter 33 sowie ein Leuchtmittel 34 auf. Anders als die vorherigen Ausführungsformen weist die Einrichtung 30 jedoch zwei Befestigungsmittel 35 in Form von Saugern auf, mit denen sie in beliebiger Höhe soweit dies das Kabel zulässt an einem Drittgegenstand, hier einem Schrank 36, befestigt werden kann.

Abschließend ist darauf hinzuweisen, dass bei Ausführungsformen der Einrichtung, bei denen kein Zeitglied und damit keine Möglichkeit zum automatischen Ausschalten des Leuchtmittels vorgesehen ist, natürlich ein von der Person selbst zu betätigendes Ausschaltmittel vorgesehen ist. Ein solches Ausschaltmittel 37, z.B. ein kleiner Tastschalter, ist exemplarisch in Fig. 1 dargestellt. Ferner kann bei einer Einrichtung umfassend einen ersten Einrichtungsteil mit Näherungsschalter und Sendemittel und einem Einrichtungsteil mit externem Leuchtmittel und Empfängermittel (wie in Fig. 2 gezeigt) das erste Einrichtungsteil eine integrierte Leistungsversorgung aufweisen, so dass es nicht unbedingt in eine deckenseitige Fassung zur Stromversorgung zu schrauben ist, sondern lediglich an einer erhöhten Position über geeignete Befestigungsmittel zu befestigen ist. Das zweite Einrichtungsteil ist über einen Netzstecker oder ebenfalls eine integrierte Versorgung betreibbar.

## Patentansprüche

1. Tragbare Einrichtung zur Erfassung der Bewegung einer Person und Ausführung einer Reaktion bei einer erfassten Bewegung, die durch Einsetzen in eine Glühbirnenfassung (7) befestigbar ist, umfassend einen die Bewegung sensierenden und die Reaktion auslösende Näherungsschalter (2 ), **dadurch gekennzeichnet, dass** die Einrichtung eine Kabelspeicher umfasst und bei einer hängend anzuordnenden Einrichtung (1, 10) der Näherungsschalter (2) in seiner Höhe variabel positionierbar ist, wobei die Höhenverstellbarkeit des Näherungsschalters (2) über den Kabelspeicher (5), aus dem oder in den ein zum Näherungsschalter (2) führendes Kabel (4) gezogen werden kann, realisiert ist.

2. Tragbare Einrichtung zur Erfassung der Bewegung einer Person und Ausführung einer Reaktion bei einer erfassten Bewegung, umfassend einen die Bewegung sensierenden und die Reaktion auslösenden Näherungsschalter (24), **dadurch gekennzeichnet, dass** die Einrichtung eine Kabelspeicher umfasst und bei einer stehend anzuordnenden Einrichtung (18, 26) der Näherungsschalter (24) in seiner Höhe variabel positionierbar ist, wobei die Höhenverstellbarkeit des Näherungsschalters (24) über den Kabelspeicher (21), aus dem oder in den ein zum Näherungsschalter (24) führendes Kabel (22) gezogen werden kann, und einen das Kabel (22) führenden teleskopartig in seiner Länge variierbaren Trägerabschnitt (20) realisiert ist.

3. Einrichtung nach Anspruch 1 oder 2, **dadurch gekennzeichnet, dass** sie ein über den Näherungsschalter (2, 24, 33) einschaltbares Leuchtmittel (3, 25, 34) umfasst.

4. Einrichtung nach einem der vorangehenden Ansprüche, **dadurch gekennzeichnet, dass** sie ein über den Näherungsschalter (2, 24) einschaltbares Sendemittel (11, 28) umfasst.

5. Einrichtung nach einem der vorangehenden Ansprüche, **dadurch gekennzeichnet, dass** wenigstens ein Anschlussmittel (6, 23, 31) zum Anschließen an eine Stromversorgung vorgesehen ist.

6. Einrichtung nach Anspruch 1 und 5, **dadurch gekennzeichnet, dass** das Anschlussmittel (6) zum Einsetzen in eine übliche Glühbirnenfassung (7) einer Beleuchtungseinrichtung (8) ausgebildet ist.

7. Einrichtung nach Anspruch 6, **dadurch gekennzeichnet, dass** das Anschlussmittel ein Gewinde (6) zum Einschrauben in die Glühbirnenfassung (7) ist.

8. Einrichtung nach Anspruch 2 und 5, **dadurch gekennzeichnet, dass** das Anschlussmittel (23, 31) ein Netzstecker ist.

9. Einrichtung nach einem der vorangehenden Ansprüche, **dadurch gekennzeichnet, dass** sie eine integrierte Stromversorgung (27) in Form wenigstens einer Batterie oder wenigstens eines Akkus aufweist.

10. Einrichtung nach einem der vorangehenden Ansprüche, **dadurch gekennzeichnet, dass** der Kabelspeicher (5) derart ausgebildet ist, dass das Kabel (4) in der jeweiligen gewählten Auszugsstellung arretiert ist.

11. Einrichtung nach einem der vorangehenden Ansprüche, **dadurch gekennzeichnet, dass** bei einer Einrichtung (1, 10, 18, 26, 30), bei der über den Näherungsschalter (2, 24, 33) ein einrichtungsseitig integriertes Leuchtmittel (3, 25, 34) eingeschaltet wird, oder bei der über das vom Näherungsschalter (2, 24, 33) betätigte Sendemittel (11) ein einrichtungsexternes Leuchtmittel (12) angesprochen wird, dem Näherungsschalter ein Zeitglied (17) zugeordnet ist, das am Ende einer Bewegungserfassung angestoßen wird, wobei nach Ablauf einer vorgegebenen Zeit das Leuchtmittel (3, 25, 34, 12) automatisch über den Näherungsschalter (2, 24, 33) ausgeschaltet oder das Sendemittel (11) über den Näherungsschalter (2) zur Gabe eines Ausschaltsignals betätigt wird.

12. Einrichtung nach Anspruch 11, **dadurch gekennzeichnet, dass** die vorgegebene Zeit vom Anwender einstellbar ist.

13. Einrichtung nach einem der vorangehenden Ansprüche, **dadurch gekennzeichnet, dass** Befestigungsmittel (35) zum Befestigen der Einrichtung (30) an einem Drittgegenstand (36) vorgesehen sind.

14. Einrichtung nach Anspruch 13, **dadurch gekennzeichnet, dass** die Befestigungsmittel (35) als Sauger oder Klemmen ausgebildet sind.

## Claims

1. A portable device for registering the movement of a person and implementing a response in the event of a registered movement, which can be fitted by inserting into a lightbulb fitting (7), comprising a proximity switch (2) sensing the movement and triggering the response,
**characterised in that**
the device provides a cable store and, in the case of a device (1, 10) to be arranged in a suspended manner, the proximity switch (2) can be positioned in a height-adjustable manner, wherein the height adjustability of the proximity switch (2) is realised via the cable store (5) from which or into which a cable (4) leading to the proximity switch (2) can be drawn.

2. The portable device for registering the movement of a person and implementing a response in the event of a registered movement, comprising a proximity switch (24) sensing the movement and triggering the response,
**characterised in that**
the device provides a cable store and, in the case of a device (18, 26) to be arranged in a standing manner, the proximity switch (24) can be positioned in a height-adjustable manner, wherein the height adjustability of the proximity switch (24) is realised via the cable store (21) from which or into which a cable (22) leading to the proximity switch (24) can be drawn and a carrier portion (20) guiding the cable (22) and variable in length in a telescopic manner.

3. The device according to claim 1 or 2,
**characterised in that**
it comprises a lamp (3, 25, 34) capable of being switched on via the proximity switch (2, 24, 33).

4. The device according to any one of the preceding claims,
**characterised in that**
it comprises a transmission means (11, 28) capable of being switched on via the proximity switch (2, 24).

5. The device according to any one of the preceding claims,
**characterised in that**
at least one connecting means (6, 23, 31) is provided for connection to a power supply.

6. The device according to claim 1 and 5,
**characterised in that**
the connecting means (6) is embodied for insertion into a conventional lightbulb fitting (7) of a lighting device (8).

7. The device according to claim 6,
**characterised in that**
the connecting means is a thread (6) for screwing into the lightbulb fitting (7).

8. The device according to claim 2 and 5,
**characterised in that**
the connecting means (23, 31) is a mains plug.

9. The device according to any one of the preceding claims,
**characterised in that**
it provides an integrated power supply (27) in the form of at least one battery or at least one power pack.

10. The device according to any one of the preceding claims,
**characterised in that**
the cable store (5) is embodied in such a manner that the cable (4) is locked in the respectively selected withdrawal position.

11. The device according to any one of the preceding claims,
**characterised in that**,
in the case of a device (1, 10, 18, 26, 30), in which a lamp (3, 25, 34) integrated in the device is switched on via the proximity switch (2, 24, 33), or in which a lamp (12) external to the device is addressed via the transmission means (11) activated by the proximity switch (2, 24, 33), a time-function element (17), which is switched on at the end of a registration of a movement, is allocated to the proximity switch, wherein at the expiry of a specified time, the lamp (3, 25, 34, 12) is automatically switched off via the proximity switch (2, 24, 33), or the transmission means (11) is activated via the proximity switch to issue a signal to switch off.

12. The device according to claim 11,
**characterised in that**
the specified time can be set by the user.

13. The device according to any one of the preceding claims,
**characterised in that**
attachment means (35) for the attachment of the device (30) to a third object (36) are provided.

14. The device according to claim 13,
**characterised in that**
the attachment means (35) are formed as suction pads or clips.

## Revendications

1. Dispositif portable destiné à détecter le déplacement d'une personne et à réagir au déplacement détecté, lequel peut être fixé par la mise en place dans une douille de lampe (7), comportant un capteur de mouvement (2) détectant le déplacement et déclenchant la réaction, **caractérisé en ce que** ledit dispositif comprend une réserve de câble et, dans le cas où le dispositif (1, 10) est fixé en suspension, le capteur de mouvement (2) peut être positionné de manière variable en hauteur, la hauteur du capteur de mouvement (2) étant réglée au moyen de la réserve de câble (5) hors de laquelle ou dans laquelle peut être tiré un câble (4) menant vers le capteur de mouvement (2).

2. Dispositif portable destiné à détecter le déplacement d'une personne et à réagir au déplacement détecté, comportant un capteur de mouvement (24) détectant le déplacement et déclenchant la réaction, **caractérisé en ce que** ledit dispositif comprend une réserve de câble et, dans le cas où le dispositif (18, 26) est monté fixe en position verticale, le capteur de mouvement (24) peut être positionné de manière variable en hauteur, la hauteur du capteur de mouvement (24) étant réglée au moyen de la réserve de câble (21) hors de laquelle ou dans laquelle peut être tiré un câble (22) menant vers le capteur de mouvement (24), et il est réalisé une partie de support (20) télescopique à longueur variable, guidant le câble (22).

3. Dispositif selon la revendication 1 ou 2, **caractérisé en ce qu'**il comprend une lampe (3, 25, 34) qui peut être allumée par l'intermédiaire du capteur de mouvement (2, 24, 33).

4. Dispositif selon l'une quelconque des revendications précédentes, **caractérisé en ce qu'**il comprend un émetteur (11, 28) qui peut être connecté par l'intermédiaire du capteur de mouvement (2, 24).

5. Dispositif selon l'une quelconque des revendications précédentes, **caractérisé en ce qu'**il est prévu au moins un moyen de raccordement (6, 23, 31) pour le branchement à une alimentation électrique.

6. Dispositif selon les revendications 1 et 5, **caractérisé en ce que** le moyen de raccordement (6) est réalisé pour être mis en place dans une douille de lampe (7) classique d'un dispositif d'éclairage (8).

7. Dispositif selon la revendication 6, **caractérisé en ce que** le moyen de raccordement est un filetage (6) destiné à être vissé dans la douille de lampe (7).

8. Dispositif selon les revendications 2 et 5, **caractérisé en ce que** le moyen de raccordement (23, 31) est une fiche de contact.

9. Dispositif selon l'une quelconque des revendications précédentes, **caractérisé en ce qu'**il comporte une alimentation électrique (27) intégrée sous la forme d'au moins une batterie ou d'au moins un accumulateur.

10. Dispositif selon l'une quelconque des revendications précédentes, **caractérisé en ce que** la réserve de câble (5) est réalisée de telle sorte que le câble (4) est bloqué dans la position d'extraction choisie dans chaque cas.

11. Dispositif selon l'une quelconque des revendications précédentes, **caractérisé en ce que** dans un dispositif (1, 10, 18, 26, 30), dans lequel une lampe (3, 25, 34) intégrée dans le dispositif est allumée par l'intermédiaire du capteur de mouvement (2, 24, 33), ou dans lequel une lampe (12), externe au dispositif, est activée par l'émetteur (11) actionné par le capteur de mouvement (2, 24, 33), un relais de temporisation (17) est associé au capteur de mouvement et est activé à la fin de la détection d'un mouvement, sachant qu'à l'expiration d'une durée prédéfinie, la lampe (3, 25, 34) est éteinte automatiquement par l'intermédiaire du capteur de mouvement (2, 24, 33) ou l'émetteur (11) est actionné par l'intermédiaire du capteur de mouvement (2) pour délivrer un signal de déconnexion.

12. Dispositif selon la revendication 11, **caractérisé en ce que** la durée prédéfinie peut être réglée par l'utilisateur.

13. Dispositif selon l'une quelconque des revendications précédentes, **caractérisé en ce qu'**il est prévu des moyens de fixation (35) pour fixer le dispositif (30) à un objet (36) indépendant.

14. Dispositif selon la revendication 13, **caractérisé en ce que** les moyens de fixation (35) sont réalisés sous la forme de ventouses ou de pinces.
